# EUROPEAN PATENT SPECIFICATION

(11) **EP 3 393 394 B1**
(45) Date of publication and mention of the grant of the patent: **30.12.2020**
(21) Application number: 16879523.5
(22) Date of filing: 04.08.2016
(51) Int. Cl.: A61C 3/00, A61C 7/00, A61C 7/12, A61C 7/14, A61C 7/28

(54) **ARCHWIRE FOR USE WITH A PASSIVE SELF-LIGATION ORTHODONTIC BRACKET**
BOGENDRAHT ZUR VERWENDUNG MIT EINER PASSIVEN KIEFERORTHOPÄDISCHEN SELBSTLIGATIONSKLAMMER
FIL D'ARC ORTHODONTIQUE DESTINÉ À ÊTRE UTILISÉ AVEC UN BRACKET PASSIF AUTO-FIXANT

(30) Priority: 21.12.2015 US 201514976074
(43) Date of publication of application: 31.10.2018
(73) Proprietor: Premier Orthodontic Designs, LLLP, Carson City NV (US)
(72) Inventor: DAMON, Paul, L., Spokane WA 99223 (US); DAMON, Dwight, H., Spokane WA 99223 (US)
(74) Representative: CSY Herts
(86) International application number: PCT/US2016/045508
(87) International publication number: WO 2017/112004

(56) References cited:
- WO-A1-2009/078031
- AU-A- 5 016 399
- US-A1- 2009 042 160
- US-A1- 2015 230 887
- US-B2- 7 686 613
- US-B2- 7 878 802
- US-B2- 8 714 972

## Description

### TECHNICAL FIELD

The present invention relates to an archwire for use with a passive, self-ligation orthodontic bracket, and more specifically to an archwire which has a given cross-sectional shape, and which further when received in an archwire slot can affect first, second and third order movements of a tooth of a patient undergoing orthodontic treatment in a manner not possible heretofore.

### BACKGROUND OF THE INVENTION

In our earlier U.S. Patent No. 9,198,740 we disclosed a novel orthodontic bracket which was readily and easily utilized by a clinician, in a clinical setting, and which further provided a convenient means for adjusting the new orthodontic bracket in order to achieve a clinician selected first, second and third order movements of a patient's tooth in a manner not possible heretofore. In particular, the aforementioned new and novel orthodontic bracket included a bracket base which was affixed to the anterior facing surface of a patient's tooth, and which further had a bracket body which was partially rotatably moveable relative to the bracket base, and in a given axis of movement when the bracket base was suitably affixed to the tooth. The teachings of this patent disclose a bracket body which can be releasably detached from the bracket base, and an alternative bracket body releasably attached to the bracket base during a given orthodontic treatment plan in order to provide a clinician a wide range of treatment options in advancing an orthodontic treatment regimen and achieving desired first, second and third order movement of a patient's tooth in a manner not possible with prior art appliances that have been employed in the past.

Those skilled in the art will recognize that the teachings of the aforementioned U.S. Patent concern an adjustable, passive self-ligating bracket which has sighificantly advanced the treatment options which are available to treat patients having various tooth anomalies in an expeditious, and much more comfortable manner, and further allows clinicians to achieve first, second and third order movement of a patient's tooth in a more precise, and exact way than was possible using the prior art appliances. While the aforementioned orthodontic bracket has provided clinicians with numerous treatment options for securing or treating various tooth anomalies, shortcomings attributable to the design of the prior art self-ligating orthodontic brackets have been known for some time and have detracted from the perceived usefulness of this type of orthodontic appliance under certain treatment conditions. For example, the aforementioned orthodontic bracket as disclosed in U.S. Patent No. 9,198,740, and which issued on December 1, 2015, has a moveable bracket body which can be readily adjusted by the clinician so as to provide or impart a low torqueing couple, a neutral torqueing couple or a high torqueing couple to the archwire which is received or otherwise enclosed within the associated archwire slot. In employing this or other styles of passive self-ligation orthodontic brackets, clinicians have continually noted some difficulty in closing the associated movable gate of the passive self-ligation orthodontic bracket when attempting to insert an archwire in the archwire slot, and when the orthodontic bracket has been oriented so as to impart either a low torqueing couple or a high torqueing couple to the archwire.

The aforementioned gate closing problem was chiefly associated with the enclosed archwire frictionally interfering with the closing or opening of the moveable gate by frictionally and forcibly engaging either the top or bottom, posterior facing surface of the moveable gate during the movement of the gate. As should be understood, and because of the close dimensional tolerances which are used in the fabrication of such passive self-ligation orthodontic brackets, this frictional resistance to the closure of the moveable gate has impeded the use of these adjustable, passive self-ligation brackets in certain treatment situations. To overcome or address this problem, clinicians have utilized or employed a smaller cross-sectionally dimensioned archwire within the archwire slot, and then they were able to close the moveable gate. However, the provision of this smaller archwire provided an incomplete solution to the aforementioned problem inasmuch as the smaller dimensioned archwire provided in the archwire slot negated or otherwise diminished the amount of first order movement control that the archwire could impart to the orthodontic bracket. In view of this diminished first order movement control, clinicians have often reverted to using a larger-sized archwire in the archwire slot in order to achieve the desired first and often second order movement control of the patient's tooth which had been sacrificed. Of course, the return to the larger cross-sectionally sized archwire, yet again, substantially prevented the closing of the moveable gate when the moveable bracket body was oriented so as to deliver either a low torqueing couple or a high torqueing couple to the enclosed archwire.

Therefore in the use of the aforementioned prior art adjustable passive self-ligation brackets a clinician was often faced with a dilemma which, on the one hand required giving up or surrendering a portion of the first and/or second order tooth control they might have over a patient's tooth in order to achieve third order movement which would be associated with either a high torqueing couple or low torqueing couple that is imparted to the enclosed archwire. Only rarely could a clinician have consistent first, second and third order control over the tooth of a patient.

An improved archwire which avoids the detriments associated with the prior art practices utilized heretofore is the subject matter of the present invention.

A segmented archwire having a segment with rounded off corners is known from WO2009/078031 A1.

### SUMMARY OF THE INVENTION

The invention is defined by independent claim 1. A first aspect of the present invention relates to an archwire for use with a passive self-ligation orthodontic bracket, and which has an archwire slot, and which further includes an elongated and resilient main body which is dimensioned to be received within the archwire slot of the passive self-ligation bracket, and wherein the resilient main body of the archwire has a circular-square or a circular-rectangular cross sectional shape having a predetermined circumferential width dimension, and a variable thickness dimension, and wherein the circumferential width dimension of the resilient main body maintains a consistent first order movement control of a tooth of a patient when the resilient main body of the archwire is cooperating with the passive self-ligation bracket, and wherein the variable thickness dimension of the archwire facilitates an adjustable application of a force to the passive self-ligation orthodontic bracket so as to achieve a clinician selectable, and controllable, second and third order movement of the tooth of the patient.

Still another aspect of the present invention relates to an archwire for use with a passive self-ligation orthodontic bracket, and which has an archwire slot, and which further includes an elongated and resilient main body which is dimensioned to be received within the archwire slot of the self-ligation orthodontic bracket with minimal bending, and which still further has a circular-square or circular-rectangular cross sectional shape, and wherein the resilient main body has a predetermined, and selectively variable thickness dimension which, when received in the archwire slot, and cooperating with the passive self-ligation orthodontic bracket, exerts a force which is based, at least in part, upon the thickness dimension of the resilient main body of the archwire, and which further effects first, second or third order movements of a tooth of a patient upon which the self-ligation orthodontic bracket is attached.

Still another aspect of the present invention relates to an archwire for use with a passive self-ligation orthodontic bracket and which has an archwire slot, and which further includes an elongated and resilient main body which is received within the archwire slot with a minimal amount of bending, and wherein the archwire slot has a width and height dimension, and the archwire has a predetermined width dimension, and a selectable thickness dimension, and wherein the archwire when received in the archwire slot cooperates with the passive self-ligation orthodontic bracket so as to simultaneously impart forces to the passive self-ligation orthodontic bracket, and which affects first, second and third order movement of a tooth of a patient, and upon which the passive self-ligation orthodontic bracket is attached, and wherein the resilient main body of the archwire has a circular-square or circular-rectangular cross sectional shape which, when cooperating with the archwire slot, consistently maintains first order movement control of the tooth of the patient while simultaneously permitting the passive self-ligation orthodontic bracket to exert a selectable amount of torqueing force to the tooth so as to achieve desired third order movement of the tooth based, at least in part, upon the thickness dimension of the archwire which is selected and positioned within the archwire slot.

Yet still another aspect of the present invention relates to an archwire for use with a self-ligation orthodontic bracket and which has an archwire slot, and which further includes an elongated and resilient main body which is dimensioned to be received within the archwire slot of the passive self-ligation bracket, and wherein the resilient main body of the archwire has a circular-square or a circular-rectangular cross sectional shape having a predetermined circumferential width dimension, and a variable thickness dimension, and wherein the resilient main body further has a longitudinal axis, and wherein the circular-square or circular-rectangular shaped main body is further defined by spaced, substantially parallel and planar superior and inferior facing surfaces which are individually oriented along parallel chords of the elongated, circular-square or circular-rectangular shaped main body, and wherein the thickness dimension of the resilient main body is measured between the superior and inferior facing surfaces, and wherein the superior and inferior facing surfaces are located at an equally spaced, radial distance from the longitudinal axis, and wherein the circumferential width dimension of the resilient main body of the archwire maintains a consistent first order movement control of a tooth of a patient when the archwire is cooperating with the passive self-ligation bracket, and wherein the variable thickness dimension of the archwire facilitates an adjustable application of a force to the passive self-ligation orthodontic bracket so as to achieve a clinician selectable, and controllable, second and third order movement of the tooth of the patient.

These and other aspects of the present invention will be discussed in greater detail hereinafter.

### BRIEF DESCRIPTION OF THE DRAWINGS

Preferred embodiments of the invention are described below with reference to the following accompanying drawings.
Fig. 1 is an enlarged, greatly simplified view of a patient's tooth having a passive self-ligating orthodontic bracket mounted thereon, and an archwire of the present invention extending therethrough, and cooperating therewith.
Fig. 2 is a greatly enlarged, transverse vertical cross-sectional view taken through a prior art rectangular-shaped archwire.
Fig. 3 is a greatly enlarged, transverse vertical cross-sectional view of a circular-square or circular-rectangular shaped archwire of the new invention.
Fig. 4A is a greatly enlarged, side elevation view of a prior art adjustable, passive self-ligation bracket which encloses an archwire of traditional design, and wherein the adjustable, passive self-ligation bracket is oriented so as to impart a low torqueing couple to the enclosed archwire.
Fig. 4B is a greatly enlarged, side elevation view of a prior art adjustable passive self-ligation bracket which encloses an archwire of traditional design, and which further is oriented so as to impart a neutral torqueing couple to the enclosed archwire.
Fig. 4C is a greatly enlarged, side elevation view of a prior art adjustable passive self-ligation bracket which encloses an archwire of traditional design, and wherein the adjustable, passive self-ligation bracket is oriented so as to impart a high torqueing couple to the enclosed archwire.
Fig. 5A is a greatly enlarged, side elevation view of a prior art adjustable, passive self-ligation bracket which encloses an enlarged rectangular cross-sectionally shaped archwire of traditional design, and wherein the adjustable, passive self-ligation bracket is oriented so as to exert a low torqueing couple on the enlarged cross-sectionally shaped archwire which is enclosed therein.
Fig. 5B is a greatly enlarged, side elevation view of a prior art adjustable, passive self-ligation bracket, and which encloses an enlarged rectangular cross-sectionally shaped archwire of traditional design, and wherein the adjustable passive self-ligation bracket is oriented so as to exert a neutral torqueing couple on the enlarged cross-sectionally shaped archwire of traditional design.
Fig. 5C is a greatly enlarged, side elevation view of a prior art, adjustable, passive self-ligation bracket which encloses an enlarged rectangular cross-sectionally shaped archwire of traditional design, and wherein the adjustable, passive self-ligation bracket is oriented so as to exert a high torqueing couple on the enclosed and enlarged archwire.
Fig. 6 is a greatly enlarged, transverse vertical cross-sectional view of a traditional, circular shaped archwire which has been employed in various orthodontic appliances heretofore.
Fig. 7 is a greatly enlarged transverse vertical cross-sectional view of the circular-square or circular-rectangular shaped archwire of the present invention.
Fig. 8 is a greatly enlarged, side elevation view of a prior art, nonadjustable, passive self-ligation bracket which may utilize the new archwire of the present invention.
Fig. 8A is a greatly enlarged, side elevation view of a prior art, nonadjustable self-ligation bracket, and which is oriented so as to exert a low-torqueing force to a patient's tooth.
Fig. 8B is a greatly enlarged, side elevation view of a prior art, nonadjustable self-ligation bracket, and which is oriented so as to exert a neutral torqueing couple to a patient's tooth.
Fig. 8C is a greatly enlarged, side elevation view of a prior art, nonadjustable self-ligation bracket, and which is oriented so as to exert a high torqueing couple to a patient's tooth. Further a line extends through each of Figs. 8A, 8B and 8C so as to demonstrate the ability of the aforementioned prior art nonadjustable self-ligation brackets to achieve a level, archwire slot line-up which achieves the benefits of the present invention.
Fig. 9A is a greatly enlarged, fragmentary, side elevation view of a prior art adjustable, passive self-ligation bracket utilizing the archwire of the present invention, and wherein the adjustable, passive self-ligation bracket is exerting a low torqueing couple to the enclosed new archwire as disclosed herein.
Fig. 9B is a greatly enlarged, side elevation view of an adjustable, prior art passive self-ligation bracket which encloses the archwire of the new invention, and wherein the adjustable, passive self-ligation bracket is oriented so as to affect a neutral torqueing couple on the enclosed new archwire of the present invention.
Fig. 9C is a greatly enlarged, side elevation view of a prior art, adjustable, passive self-ligation bracket which encloses the archwire of the present invention, and wherein the adjustable, passive self-ligation bracket is oriented so as to affect a high torqueing couple on the enclosed new archwire of the present invention.
Fig. 10A is a greatly enlarged, simplified, graphical depiction of yet another form of the new archwire of the present invention, and wherein the archwire is shown in an operable orientation relative to only a minimally graphically depicted archwire slot, and associated moveable gate, and wherein a low torqueing couple is being imparted to the second form of the archwire as shown.
Fig. 10B is a greatly enlarged and graphically simplified depiction of a second form of the new archwire of the present invention, and which is illustrated as being depicted only generally within a graphically simplified archwire slot, and wherein the new form of the archwire is shown oriented in a fashion where a high torqueing couple is being imparted to the new archwire of the present invention.

### DETAILED DESCRIPTION OF THE PREFERRED EMBODIMENTS

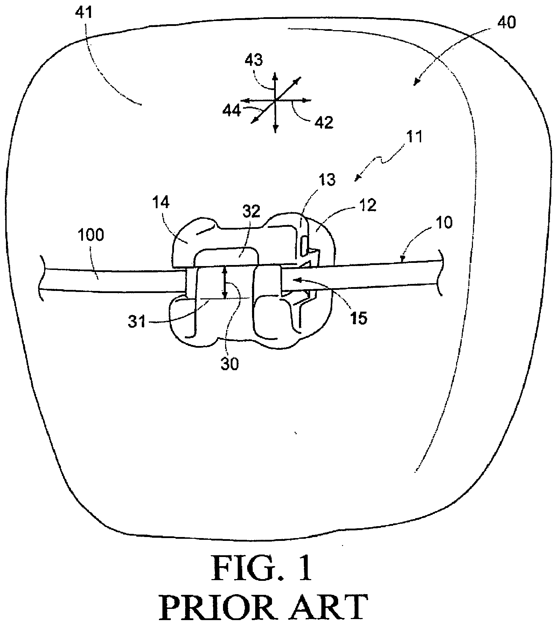

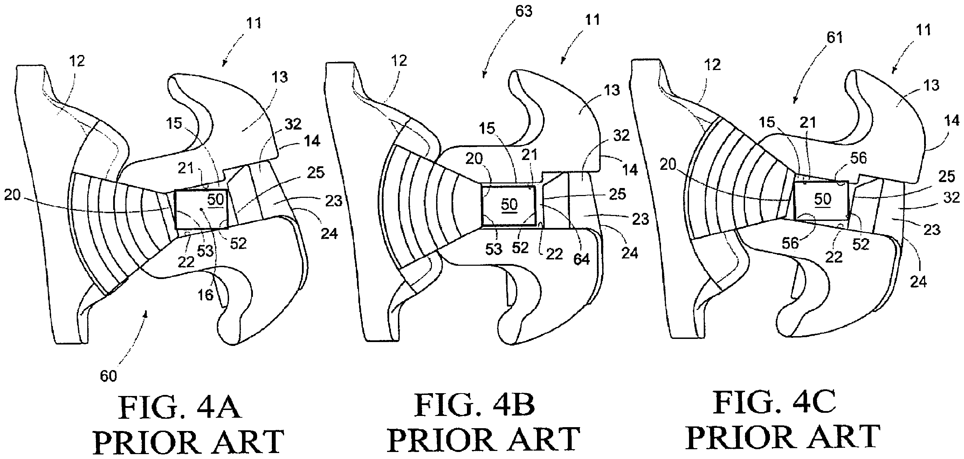

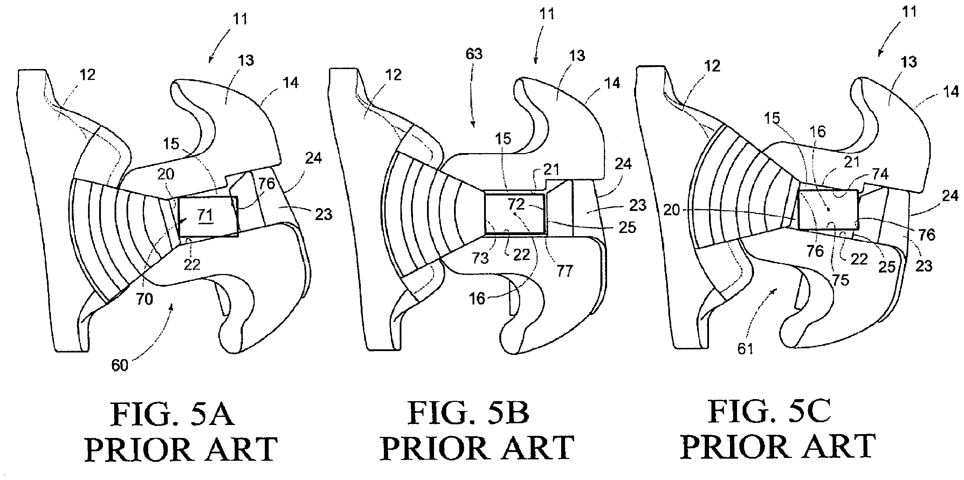

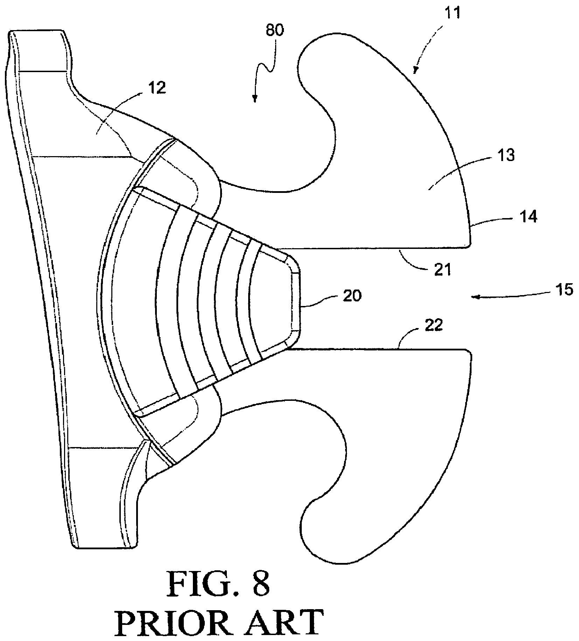

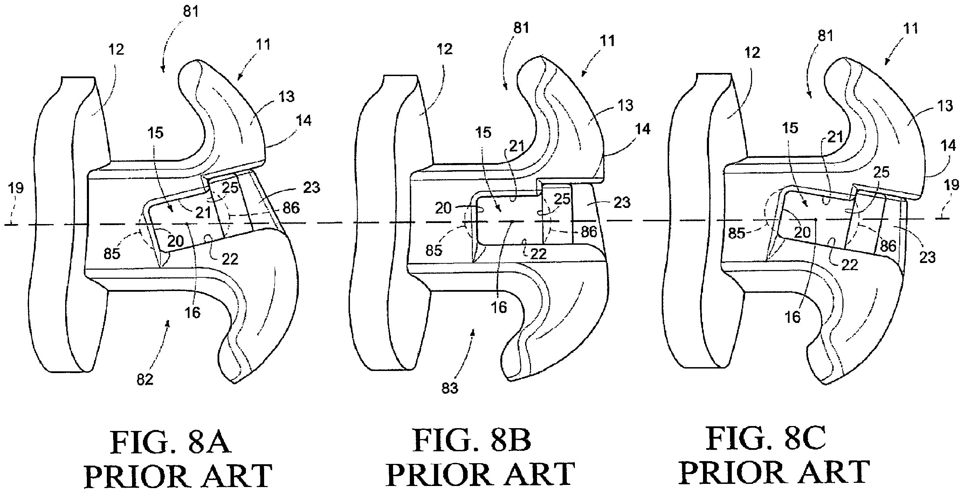

The archwire for use with a passive self-ligation orthodontic bracket of the present invention is generally indicated by the numeral 10 in Fig. 1, and following. The archwire 10 of the present invention is operably used in combination with a passive, self-ligating bracket 11 of conventional design. As earlier disclosed, the adjustable orthodontic bracket as shown in many of the Figures is similar in design to that as seen and described in U.S. Patent No. 9,198,740, and which issued on December 1, 2015 to the present inventors, Doctors Paul and Dwight Damon. Another form of an orthodontic bracket which may employ the present archwire is seen in Fig. 8. However, this orthodontic bracket is not adjustable when it is in use on a patient's tooth. Figs. 8A, 8B and 8C show other forms of this nonadjustable passive self-ligation bracket and which impart other torque expressions, and which further achieve a level archwire slot orientation to achieve the benefits of the present invention. In the arrangement as seen in Fig. 1 and following, the passive self-ligating bracket 11 includes a bracket base 12, and a selectively moveable and/or adjustable bracket body which is generally indicated by the numeral 13. The bracket body has an anterior facing surface 14, and an archwire slot 15 is formed in the bracket body 13 and communicates with the anterior facing surface 14. Still further, the archwire slot 15 is defined, in part, by a central region 16, and further has a given width dimension 17, and a height dimension 18. The prior art self-ligation orthodontic brackets as seen in the drawings, whether adjustable (Figs. 4A-4C); or nonadjustable (Figs. 8A-8C) are illustrated in a fashion to show that the archwire slots 15 are located along a level line 19 which passes through the central region 16 of each archwire slot 15. This level slot line-up of the respective orthodontic brackets greatly enhances the operation of the new archwire 10 as will be discussed, below. The archwire slot 15 is further defined, in part, by an anterior facing surface 20 which is best seen in Fig. 5A, and following. The archwire slot 15 is also formed, in part, by a superior surface 21, an inferior surface 22, and further is defined, in part, by a moveable gate 23. It should be understood from Fig. 1, and Figs. 5A, and following, and as further discussed in the aforementioned U.S. Patent, the passive self-ligating bracket 11 utilizes or employs a moveable gate 23 which is slideably mounted on the anterior facing surface 14 of the bracket body 13, and rendered moveable relative thereto. The moveable gate 23 has an anterior or outside facing surface 24 which may be frictionally engaged by a clinician, not shown, and further has an opposite, posterior facing surface 25 which forms, at least in part, a portion of the archwire slot 15, and which encloses the archwire 10 of the present invention. As seen in the drawings, the moveable gate 23 is operable to travel along the path of movement 30 between a first non-occluding position 31, to a second occluding position 32 (Fig. 1). In the second occluding position 32 the moveable gate 23 encloses, at least in part, a portion of the archwire 10 of the present invention. Further, and when the bracket body 13 is moved to a given orientation relative to the bracket base, the enclosed archwire 10 is operable to impart forces to the bracket body 13 so as to affect first, second and third order movement of the patient's tooth upon which the passive self-ligating bracket 11 is mounted. The impartation of first, second and third order movements to the patient's tooth by the operation of the present invention 10 will be discussed in greater detail in the paragraphs which follow.

For purposes of the present invention, as described hereinafter, it will be understood that the various forms of the invention are to be employed in combination with a passive self-ligation orthodontic bracket 11 which is releasably affixed to a patient's tooth 40 as seen in Fig. 1, and in particular to the anterior facing surface 41 thereof. The passive self-ligation orthodontic bracket 11, in its various forms, and in combination with the archwire 10 as will be described, hereinafter, is employed to provide a multiplicity of selective torque expressions which individually, and forcibly act upon the patient's tooth 40. For purposes of this patent application the term "torque expression" as used hereinafter is defined as the force which provides rotation to a patient's tooth 40 around the X axis, and that being in the mesial/distal direction. In particular the passive self-ligation orthodontic bracket 11 can be employed to achieve first, second and third order movements that is 42, 43 and 44 respectively as seen in Fig. 1 without a clinically predetermined manipulation, bending, twisting or other rotation of the archwire 10 as will be described hereinafter, or the often repeated replacement of the same archwire during the orthodontic treatment. One of the novel features of the present invention 10 relates to the fact that the new orthodontic archwire, as will be described, hereinafter, can be placed in or otherwise enclosed within the passive self-ligation bracket 11 which is affixed to the tooth of the patient 40 without substantial bending or other manipulation and which has been a prevalent practice for clinicians for decades. Further, and as will be discussed later in this patent application, the treatment of a patient may proceed to completion without the removal of the bracket base 12 from the patient's tooth 40, although the bracket body 13 which is releasably mounted on the bracket base 12 may be replaced with other bracket bodies during the treatment period based upon the clinical judgment of the treating clinician. The present invention 10 provides a novel means by which a clinician, by utilizing various means including different bracket body inserts (not shown), can readily adjust the cross sectional dimension of an archwire slot 15, achieves first, second and third order movements 42, 43 and 44 of the tooth of a patient 40, and thereby considerably shortens patient treatment times, achieves superior treatment results, and increases the patient's comfort in a manner not possible by utilizing the prior art appliances or practices which are known. Still further, and in the arrangement as seen in the present drawings, the adjustable, passive self-ligation bracket 11 of the present invention further receives the archwire 15, and is moveable in both the vertical and horizontal plane and has a central region 16, and wherein the rotation of the archwire slot 15 which is carrying the archwire 10, in either the vertical or horizontal planes imparts simultaneous first, second and third order movements 42, 43 and 44, respectively, to the tooth 40 of the patient, and wherein the movement of the archwire is substantially maintained about the central region 16 of the archwire slot 15. This is best seen by reference to Figs. 8A, 8B and 8C respectively.

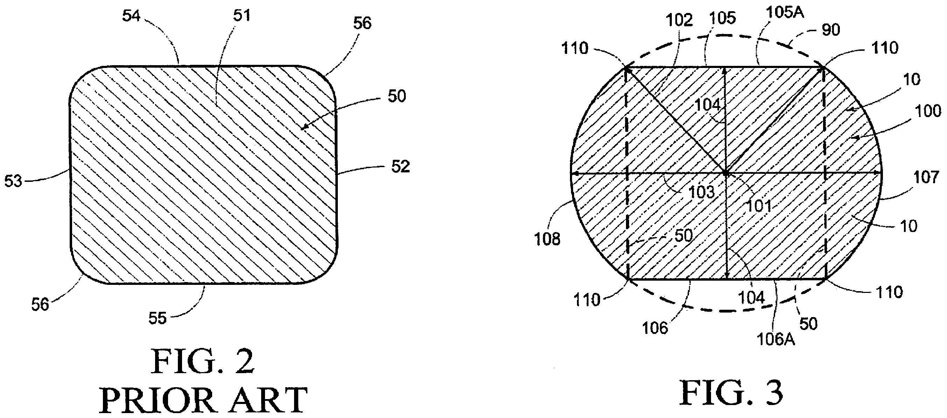

Referring now to Fig. 2, a greatly enlarged, transverse vertical cross-sectional view is illustrated of a prior art rectangular-shaped archwire 50, and which has been used, heretofore, in various orthodontic appliances for many years. The prior art rectangular-shaped archwire 50 has a main body 51, which is rectangular or square in cross section, and which further is resilient and provides a torqueing force which is transmitted to an associated bracket body 13 in order to impart movement to an underlying patient's tooth 40. The main body 51 has an anterior facing surface 52, and an opposite posterior facing surface 53. The main body further has a superior, and an inferior facing surfaces 54 and 55, respectively. Typically in rectangular-shaped archwires of this design, the rectangular-shaped archwire has four rounded edges, or corners, and which are generally indicated by the numeral 56. The archwire 50 is sized so as to be received, and operationally enclosed within, an archwire slot 15. This is best seen by reference to Figs. 4A through 4C, respectively. In this regard, and as seen by reference to Fig. 4A, the problem associated with using a traditional, archwire 50 as seen in Fig. 2 is demonstrated. In this regard, and as earlier discussed in this patent application, clinicians have noted problems associated with using adjustable passive self-ligation brackets 11 of the present invention, and when attempting to insert or otherwise place a prior art rectangular shaped archwire 50 within the archwire slot 15. In particular and referring now to Fig. 4A, a first problem presents itself when the adjustable passive self-ligating orthodontic bracket 11 is positioned or oriented such that the bracket body 13 imparts a low torqueing couple 60 to the enclosed prior art rectangular-shaped archwire 50. As will be recognized from a study of Fig. 4A, and in this illustrated orientation, the bracket body 13 allows the insertion of the main body 51 within the archwire slot, however the movement of the moveable gate 23 along the path of movement 30, and between the first non-occluding position 31, to the second non-occluding position 32, may be impeded when one of the corners 56 of the main body 50 frictionally engages the posterior facing surface 25 of the moveable gate 23 as it approaches the second occluding position 32. Referring now to Fig. 4C, a similar problem presents itself when a prior art rectangular-shaped archwire 50 is attempted to be inserted within a passive self-ligation bracket 11, and where the passive self-ligation bracket is oriented so as to provide a high torqueing couple 61 to the enclosed prior art rectangular shaped archwire 50. In this regard, the high torqueing couple 61 causes, yet again, one of the corners 56 of the main body 51 of the prior art rectangular-shaped archwire 50 to frictionally engage the posterior facing surface 25 of the moveable gate 23. Referring now to Fig. 4B, a greatly enlarged side elevation view is seen of a passive self-ligation bracket 11, and which is oriented so as to provide a neutral torqueing couple 63 to the enclosed prior art rectangular-shaped archwire 50. The reader should note the significant gap or space 64 which is located between the anterior facing surface 52 of the main body 51, and the posterior facing surface 25 of the moveable gate 23. This gap 64 contributes or otherwise effects, to some degree, the amount of first order movement control 42 that a clinician can impart to an associated tooth 40 when a prior art rectangular-shaped archwire 50 is employed in a passive self-ligation bracket 11 as illustrated.

Referring now to Figs. 5A, 5B and 5C respectively, what is depicted is a prior art passive, adjustable self-ligation bracket 11 of conventional design, and which is shown, in Fig. 5A as providing a low torqueing couple 60; a neutral torqueing couple 63 in Fig. 5B; and a high torqueing couple 61 in Fig. 5C. Figs. 5A through 5C are provided so as to illustrate the prior corrective actions that clinicians have taken in order to maintain first order control 42 over a patient's tooth 40, in view of the problems associated with using smaller dimensioned square or rectangular archwires as seen in Figs. 4A, 4B and 4C respectively. As noted earlier, and in order to address the problem associated with the closing or opening of the moveable gate 23, clinicians have often resorted to using smaller dimensioned rectangular-shaped archwires 50 as seen in Figs. 4A-4C. However, the use of such smaller dimensioned rectangular-shaped archwires 50 has caused a gap or space 64 (Fig. 4B) to be created between the anterior facing surface 52 of the main body 51, and the posterior facing surface 25 of the moveable gate 23. This gap, while allowing the moveable gate 23 to move along the path of movement 30, sacrificed a portion of the first order movement control 42 that the clinician was able to exert over the tooth of the patient 40. As seen in Figs. 5A, 5B and 5C respectively, to reestablish, or further to fully implement or establish complete first order of control 42 on the patient's tooth 40, clinicians have often used a larger dimensioned archwire 70. The larger cross-sectionally dimensioned and rectangular-shaped archwire has a main body 71 having anterior and posterior facing surfaces 72 and 73 respectively; and superior and inferior facing surfaces 74 and 75 respectively. Similar to the smaller dimensioned archwire 50, the larger cross-sectionally dimensioned and rectangular shaped archwire has corners 76 which, when the bracket body 13 is adjustably moved into positions so as to implement a low torqueing couple 60, or a high torqueing couple 61 to the prior art enlarged rectangular-shaped archwire 70, the corners 76, as indicated, in the drawings often frictionally engaged the posterior facing surface 25 of the moveable gate 23 thereby inhibiting the closing or opening of the moveable gate 23. Referring now to Fig. 5B it will be seen that the larger cross-sectionally shaped archwire 70 substantially eliminated the gap 64 as seen in Fig. 4B and thereby reestablished first order control 42. However the earlier mentioned problem of closing the gate 23 remained.

Referring now to Fig. 8, a nonadjustable, passive self-ligation bracket 11 of traditional design is shown, and is labeled by the numeral 80, the nonadjustable passive self-ligation bracket 11, as shown, is fabricated so as to provide a neutral torqueing couple to an archwire 10 which might be received within the archwire slot 15. The non-moveable passive self-ligation bracket and which is similar to what is seen in Fig. 8, can be fabricated in separate forms so as to provide either a high torqueing couple or a low torqueing couple to an enclosed archwire 10. (Figs. 8A and 8C). However, in order to employ a nonadjustable passive self-ligation bracket 11 as seen in Fig. 8, the clinician would be required to remove the entire bracket 11 from the anterior facing surface 41 of the tooth 40 when changing torque expressions.

Referring now to Figs. 8A, 8B and 8C respectively, several prior art nonadjustable self-ligation brackets are illustrated and which are generally indicated by the numeral 81. As seen in Fig. 8A a prior art nonadjustable self-ligation bracket is shown and which, when operably cooperating with an enclosed archwire (not shown), imparts a low torqueing couple 82 to patient's tooth 40. Fig. 8B shows a similar prior art nonadjustable self-ligation bracket 81, and which is oriented so as to impart a neutral torqueing couple 83 to an archwire (not shown). Further in Fig. 8C the same form of a nonadjustable, self-ligation orthodontic bracket 81 is illustrated in an orientation so as to impart a high torqueing couple 84 to an archwire (not shown). As seen in Figs. 8A-8C a line labeled 19 extends through each view and further passes through the central region 16 of each archwire slot 15. The illustrated prior art self-ligation orthodontic brackets 81 are able to achieve a level archwire slot 15 orientation notwithstanding the torque expression the orthodontic bracket 81 is designed to impart. As should be appreciated, this feature permits the archwire 10 to be inserted in the archwire slot 15 with minimal bending, and further allows the present archwire 10 to impart increased, and clinician controllable torque which enhances the clinician's ability to achieve the desired tooth 40 movement, and proper orientation and inclination in shorter treatment times. Yet further the level archwire slot orientation facilitates the orientation of the top and bottom of the pads (not shown) and which are mounted on the bracket base 12, so as to align them in the same orientation on adjacent teeth for all of the torques for a single tooth 40. This greatly assists in the proper placement of the orthodontic bracket 11 on the respective teeth 40.

Referring still to Figs. 8A, 8B and 8C, another possible, and new feature of the present invention is seen, and wherein, in one new, possible form of the passive self-ligation orthodontic bracket, as illustrated, a new passive self-ligation bracket could be fabricated and which includes an archwire slot 15 which is defined, in part, by a concavely curved anterior facing surface 85; and /or a concavely curved posterior facing surface 86 of the moveable gate 23. Both surfaces 85 and 85 are shown in phantom lines. The use of such a bracket design would permit a clinician to utilize larger cross-sectionally shaped rectangular or square shaped archwires of traditional designs, but would avoid the earlier problems associated with inhibiting the travel or movement of the moveable gate 23.

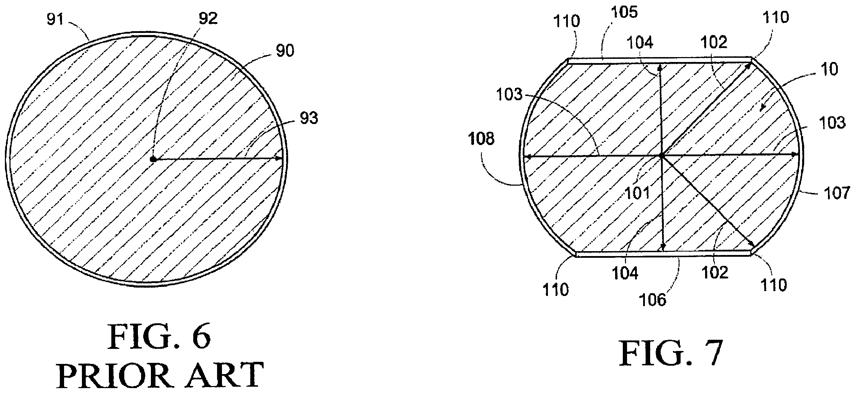

Referring now to Fig. 6 a greatly enlarged, transverse vertical cross-sectional view which is taken through an archwire of traditional design is shown. Fig. 6 depicts a circular cross sectional archwire 90, and wherein the archwire 90 has a circumferential outside facing surface 91, a longitudinal axis 92, and a radial dimension of the archwire 90 is generally indicated by the numeral 93. The circular, cross-sectionally shaped archwire 90 has a substantially uniform radial dimension 93 when measured along the line extending from the longitudinal axis 92 to the outside facing surface 91 thereof. It should be understood that the circular, cross-sectionally shaped archwire 90 has been utilized in various orthodontic appliances through the years. However, such circular cross-sectionally shaped archwires 90 have traditionally not been employed to effect significant third order movement 44 of the tooth of the patient 40. Instead, clinicians have resorted to the use of rectangular or square shaped archwires such as 50 and 70, in order to generate torqueing couples which have been effective to implement first, second and third order movements 42, 43 and 44 of a patient's tooth 40.

Referring now to Figs. 3 and 7, the archwire of the present invention 10 is shown therein in a greatly enlarged cross-sectional view. In this regard, the archwire 10 of the present invention has a circular-square or circular-rectangular cross-sectionally shaped main body 100. The circular-square or circular-rectangular cross-sectionally shaped main body 100 is resilient, and defined, in part, by a longitudinal axis, and which is generally indicated by the numeral 101. It should be understood that the circular-square or circular-rectangular main body 101 is formed from a circular cross-sectionally shaped archwire 90 by a fabrication technique which removes a portion of the outside facing surface 91 of the circular cross-sectionally shaped archwire 90. The removed portion of the previous circular shaped archwire 90 is shown in phantom lines in Fig. 3. The main body 100 has a radial dimension 102 which, in one form of the invention, may remain constant when measured from the longitudinal axis 101 to the curved outwardly facing surfaces of the main body 100, and further has a width dimension 103 which is measured along a line which extends through the longitudinal axis, and between convexly curved outwardly facing surfaces, as described below. As seen in Figs. 3 and 7 the circular-square or circular-rectangular shaped main body 100 of the new archwire 10 has a thickness dimension 104 which is measured between the substantially planar, and parallel oriented superior and inferior facing surfaces 105 and 106, respectively. Further, and as discussed, above, the main body 100 includes a first anterior facing, and convexly curved surface 107; and an opposite, second, posterior facing convexly curved surface 108. The pair of convexly curved surfaces 107 and 108, respectively, join the superior and inferior facing planar surfaces 105 and 106 at discreet angular edges or regions which are generally indicated by the numeral 110. As will be appreciated from a study of Fig. 3, the respective superior and inferior facing surfaces 105 and 106, respectively, each have a width dimension which is less than the width dimension 103 when measured along a line extending between the first and second convexly curved surfaces 107 and 108, and which is located midway between the superior and inferior facing surfaces 105 and 106, respectively. This reduced width dimension as measured across the superior and inferior facing surfaces 105 and 106, and between the angular edges or regions 110 which form at least in part the peripheral edge of the superior and inferior facing surfaces allows a clinician to maintain consistent first order movement control 42 of the tooth of the patient 40 while simultaneously allowing the clinician to adjustably apply a different amount of force to the orthodontic bracket 11 so as to achieve a clinician selectable and controllable second and third order movements 43 and 44. This adjustable second and third order movement is further achieved by varying the thickness dimension 104 of the main body 100, as will be described in the paragraphs which follow. The superior and inferior facing surfaces 105 and 106 lie along parallel chords 105A and 106A, respectively, of the previously circular shaped archwire 90 and which is depicted in phantom lines in Fig. 3, and which is subsequently machined into the shape as seen in Fig. 3.

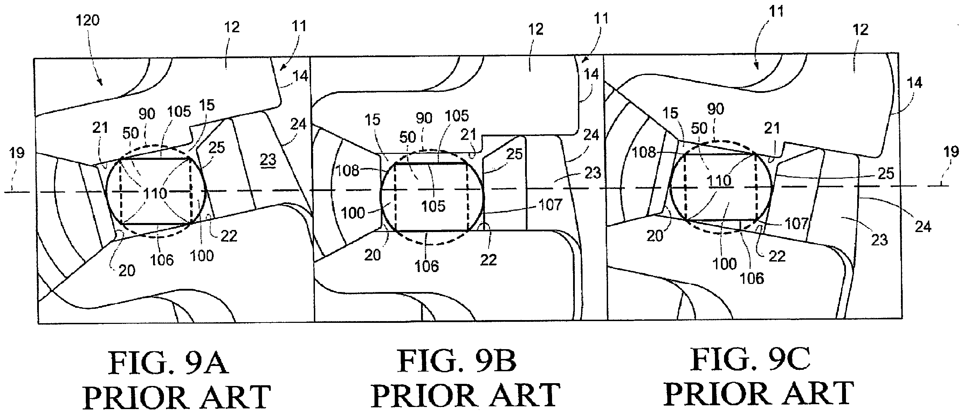

Referring now to Figs. 3 and 9A, 9B and 9C, respectively, the important features and operation of the present archwire 10 can be seen, and more fully appreciated. In particular and referring to Figs. 9A, 9B and 9C, respectively, it will be understood that the circular square, or circular-rectangular shaped main body 100 of the archwire 10 comprises features of both a traditional rectangular-shaped archwire 50, as well as a traditional circular cross-sectionally shaped archwire 90, as earlier disclosed. Referring now to Fig. 3 it will be seen that the cross-sectional shape of the prior art rectangular shaped archwire 50 is indicated by phantom lines within the main body of 100 of the new archwire 10. The cross-sectional shape of the square or rectangular-shaped archwire 50 is defined between the angular edges or regions 110, and which form a portion of the main body 100. Further, it will be appreciated from studying Fig. 3 that the first and second convexly curved surfaces 107 and 108 are oriented at the same radial distance as the circumferential outside facing surface 91 of the circular cross-sectionally shaped archwire 90 as seen in Fig. 6. Consequently, the performance or operation of the new archwire 10 includes features or characteristics which are expected or seen in traditional archwires, such as the rectangular-shaped archwire 50; and the circular cross-sectionally shaped archwire 90 (Fig. 6). Referring to Figs. 9A, 9B and 9C respectively, the operation of the new archwire 10 will now be understood.

Referring first to Fig. 9A, the main body 100 of the new archwire 10 is received in an archwire slot 15 as defined by a prior art adjustable, passive self-ligation bracket 11 of traditional design. As illustrated in this fragmentary view, the bracket body 13 is shown in an angular orientation relative to an associated bracket base 12 (not shown) so as to impart a low torqueing couple 120 to the main body 100. As will be appreciated from studying Fig. 9A it will be understood that the first and second convexly curved surfaces 107 and 108, respectively, are individually disposed in closely adjacent, juxtaposed relation relative to the anterior facing surface 20 of the archwire slot 15, and the posterior facing surface 25 of the moveable gate 23 when the moveable gate is located in an occluding position 32 relative to the archwire slot 15. As will be appreciated from studying Fig. 9A, this closely associated juxtaposed positioning of the first anterior facing convexly curved surface 107, and the second, posterior facing convexly curved surface 108 relative to the adjacent surfaces enables a clinician to consistently maintain first order control 42 when the passive self-ligation bracket 11 is oriented so as to provide a low torqueing couple 120 to the enclosed archwire 10. However, it is important to recognize that because of the orientation of the first and second convexly curved surfaces 107 and 108, the moveable gate 23 is not frictionally impeded in moving or traveling between the first non-occluding position 31, to the second occluding position 32, or vice versa, as illustrated. As earlier discussed, and in employing a rectangular or square shaped archwire having a cross-sectional dimension which would substantially fill the interior region of the archwire slot 15, and in a low torqueing couple arrangement 60 as seen in Fig. 5A, for example, the movement of the gate 23 to the occluding position 32 was substantially impeded because the larger rectangular shape which ensured first order control 42 would substantially frictionally resist the movement of the gate 23 to the fully occluded position 23. As will be readily recognized from studying Fig. 9A, torqueing couples are still capable of being made because the angular edges or regions 110 are still able to make forcible contact with the superior surface 21, and inferior surface 22, and which define, in part, the archwire slot 15. It will be recognized, therefore, that the unique shape of the circular-square or circular-rectangular shaped main body 100 allows torqueing couples to be established but further avoids the problems associated with using a larger cross-sectionally sized archwire which can impede the movement or travel of the moveable gate 23 to the occluding position 32. A similar situation arises relative to the operation of the archwire 10 when the archwire 10 is received in a passive, adjustable self-ligation bracket 11 as seen in Fig. 9C, and wherein a high torqueing couple 121 is being imparted to the enclosed archwire 10. Again, the unique shape of the archwire 10 allows a clinician to maintain first order control 42, while simultaneously allowing the archwire 10 to be inserted in the archwire slot 15, and the moveable gate 23 is subsequently moved to an occluding position 32 without being frictionally impeded in the manner as seen in Fig. 5C. As seen in Fig. 9B, the passive, adjustable self-ligation bracket 11 is illustrated as it would be seen when the new archwire 10 is received in a bracket body 13 and which is oriented so as to provide or impart a neutral torqueing couple 122 to the enclosed archwire 10. Again, the unique shape of the new archwire 10 permits the clinician to consistently maintain first order control notwithstanding the relative position or orientation of the bracket body 13.

The inventors of the present invention have discovered that varying the thickness dimension 104, of the main body 100 of the circular-square or circular-rectangular shaped main body of the new archwire 10 provides a means by which the clinician can adjustably impart a given torqueing force to the passive self-ligation bracket 11 so as to provide selective second and third order movement control 43 and 44 to the tooth of the patient 40 while maintaining consistent first order control 42. In this regard it should be understood that the archwire slot 15 of the passive self-ligation bracket 11 has a predetermined height dimension 18, and the archwire slot 15 is defined, at least in part, by a pair of spaced, planar and substantially parallel superior and inferior surfaces 21 and 22 respectively. Still further the archwire slot 15 has a given width dimension 17, which is measured between the anterior facing surface 20, and the posterior facing surface 25 of the moveable gate 23. As earlier discussed the superior and inferior facing surfaces 105 and 106 respectively of the archwire 10 define the thickness dimension of the main body 100 of the circular square or circular rectangular main body 100. In the arrangement as seen in the drawings, the new archwire 10 has a width dimension 103 which is less than the width dimension 17 of the archwire slot 15; and the archwire 10 has a thickness dimension 104 which is at least about 55% of the height dimension of the archwire slot 15. As noted earlier, the overall shape of the archwire 10 is such that the archwire consistently maintains first order movement of the tooth 40 of the patient. However, as the thickness of the archwire 10 is reduced, lighter forces are generated by the archwire 10 on the tooth 40. In the arrangement as seen in the drawings, the selective increasing of the thickness dimension 104 of the archwire 10 to greater than 55% of the height dimension of the archwire slot 15 imparts an adjustable, and increasing amount of a torqueing force to the passive, adjustable self-ligation bracket 11 so as to provide selective second and third order movements 43 and 44 respectively to the tooth of the patient 11. This allows a clinician to achieve a superior, finished treatment and alignment of the patient's teeth in a minimum of treatment time and using lighter force. This feature substantially increases patient comfort.

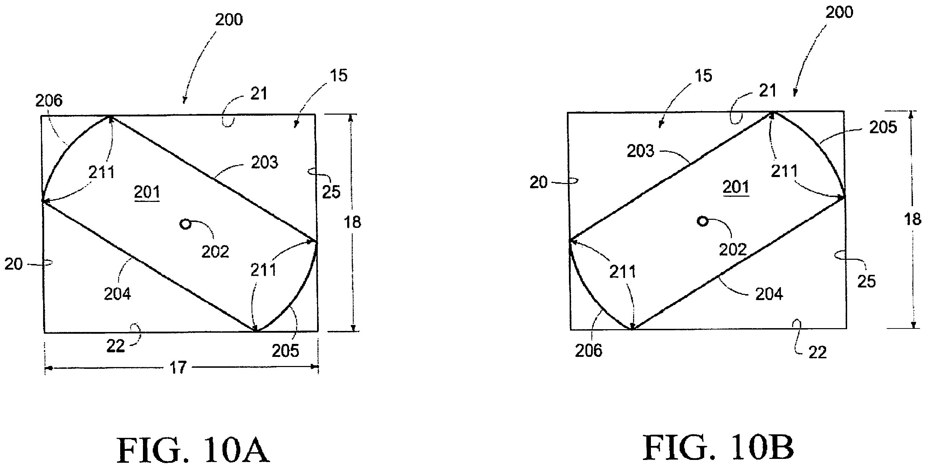

Referring now to Figs. 10A and 10B respectively, a second form of the new archwire 10 of the present invention is generally indicated by the numeral 200 in those views. As discussed in the paragraphs, above, the new archwire of the present invention 10 has a selective thickness dimension which provides a convenient means for a clinician to exert predetermined amounts of variable torque so as to provide selective second and third order movement 43 and 44 to a patient's tooth 40, and while simultaneously maintaining first order control 42. The selective amount of torque is achieved by varying the thickness dimension 104. The archwire 200 as seen in Figs. 10A and 10B shows one type of archwire configuration that can be utilized in order to generate very small, but precise amounts of torque so as to provide the final, finish movements of the patient's teeth and which achieves superior tooth alignment. As seen in Fig. 10A and 10B, an enlarged, very fragmentary, and graphically depicted archwire slot 15 is illustrated, and which is occluded by a moveable gate 23, and only the posterior surface 25 of which is shown. The second form of the archwire 200 has a main body 201, and which is defined, in part, by a longitudinal axis 202. Again, the main body 201 has a superior facing surface 203, and an opposite, inferior facing surface 204. The thickness dimension of the main body 201 is measured, again, between the superior and inferior surfaces 203 and 204, respectively. Still further the main body 201 has an anterior, concavely curved surface 205; and an opposite concavely curved posterior facing surface 206. As with the other form of the intervention, the anterior facing surface 205 is positioned in closely spaced, juxtaposed relation relative to the posterior facing surface 25 of the moveable gate 23. Further, the convexly curved posterior facing surface 206 is located in an adjacent, juxtaposed relationship relative to the anterior facing surface 20 of the archwire slot. Again, the main body 201 has a multiplicity of angulated edges or regions 211 which define the peripheral edges of the superior facing surface 203, and the opposite inferior facing surface 204. As can be seen in the drawings, and in a low torqueing position (Fig. 10A) it will be seen that the various angulated edges or regions 211 are operable to engage both the superior surface of the archwire slot 21, and the inferior surface 22, thereof. Notwithstanding this engagement, it will be seen that the anterior facing, convexly curved surface 205 still permits the posterior facing surface 25 of the moveable gate 23 to pass by. Similarly when studying Fig. 10B, and which is shown in a high torqueing position, the archwire 10, again, is able to deliver the torqueing force necessary while simultaneously allowing the moveable gate 23 to pass thereby. It should be appreciated that as the thickness dimension of the main body is reduced, the amount of torque that the wire can impart to the bracket body 13 is further reduced. Thus a clinician, by selecting various thicknesses of archwire 10, can deliver refined and selective amounts of torque in order to provide fine finish control and achieve superior tooth alignment and position in a manner not possible heretofore.

### OPERATION

The operation of the described embodiments of the present invention are believed to be readily apparent, and are briefly summarized at this point. In its broadest aspect the present invention relates to an archwire 10 for use with a passive self-ligation orthodontic bracket 11, and which has an archwire slot 15, and which further includes an elongated resilient main body 100 which is dimensioned to be received within the archwire slot 15 of the passive self-ligation bracket 11, and wherein the resilient main body 100 of the archwire 10 has a circular-square or circular-rectangular cross-sectional shape having a predetermined circumferential width dimension 103; and a variable thickness dimension 104. The circumferential width dimension 103 of the resilient main body 100 maintains a consistent first order movement control 42 of a tooth 40 of a patient when the resilient main body 100 of the archwire 10 is cooperating with the passive self-ligation bracket 11. The variable thickness dimension 104 of the archwire facilitates an adjustable application of a force to the passive self-ligation orthodontic bracket so as to achieve a clinician selectable and controllable, second and third order movements 43 and 44, respectively, of the tooth 40 of the patient.

Another aspect of the present invention relates to an archwire 10 for use with a passive self-ligation orthodontic bracket 11, and which has an archwire slot 15, and which further includes an elongated and resilient main body 100 which is dimensioned to be received within the archwire slot 15 of the self-ligation orthodontic bracket 11 with minimal bending and which additionally has a circular-square or circular-rectangular cross-sectional shape. The resilient main body 100 has a predetermined, and selectively variable thickness dimension 104 which, when received in the archwire slot 15, and cooperating with the passive self-ligation orthodontic bracket 11 exerts a force which is based, at least in part, upon the thickness dimension 104 of the resilient main body 100 of the archwire 10, and which further effects first, second or third order movements 42, 43 and 44 respectively of a tooth 40 of a patient upon which the self-ligation orthotic bracket 11 is attached.

In the present invention 10 the archwire slot 15 of the passive self-ligation bracket 11 has a predetermined height dimension 18, and the archwire 10 is defined, at least in part, by a pair of spaced, planar substantially parallel, superior and inferior facing surfaces 105 and 106, respectively, and a pair of spaced, convexly curved anterior and posterior facing surfaces 107 and 108. The archwire slot 15 has a predetermined width dimension 17, and the archwire 10 has a width dimension 103 which is less than the width dimension 17 of the archwire slot 15. The archwire 10 has a thickness dimension 104 when measured between the superior and inferior facing surfaces 105 and 106, respectively, and which is at least 55% of the height dimension 18 of the archwire slot 15. The archwire 10 consistently maintains first order movement 42 of the patient's tooth 40. In the arrangement as seen in the drawings, selectively increasing the thickness dimension 104 of the archwire 10 to greater than about 55% of the height dimension 18 of the archwire slot 15 typically imparts an increasingly adjustable amount of a torqueing force to the passive self-ligation bracket 11 so as to provide selective, second and third order movement 43 and 44, to the patient's tooth 40.

The passive, self-ligation orthodontic bracket 11 mounts a moveable gate 23 which selectively occludes the archwire slot 15. As earlier discussed, the moveable gate 23 has a posterior facing surface 25. The archwire slot 15 is defined, at least in part, by a vertically oriented, anterior facing surface 20. The pair of spaced, convexly curved surfaces 107 and 108, respectively, and which define, at least in part, a portion of the archwire 10 are individually located in closely spaced, juxtaposed relation relative to the anterior facing surface 20 of the archwire slot 15, and the posterior facing surface 25 of the moveable gate 23, when the moveable gate 23 is oriented so as to occlude 32 the archwire slot 15. In the arrangement as seen in the drawings, the passive, self-ligating orthodontic bracket 11 imparts a low torqueing couple; a high torqueing couple; or a neutral torqueing couple 120, 121 and 122, respectively, to the enclosed archwire 10 so as to effect, at least in part, first, second and third order movements 42, 43 and 44, respectively, to the tooth 40 of a patient during an orthodontic treatment regimen.

As earlier described, the archwire 10 of the present invention is defined, in part, by superior and inferior facing surfaces 105 and 106, respectively, and wherein in one form of the invention, the respective superior and inferior facing surfaces have a similar cross-sectional dimension. In another possible form of the invention the superior and inferior facing surfaces of the archwire 10 each have a different cross-sectional dimension. In still another form of the invention 10 the resilient main body 100 of the archwire 10 has a longitudinal axis 101, and wherein a radial dimension 102 of the archwire 10 when measured along a line extending radially, outwardly from the longitudinal axis 101, and to the respective convexly curved surfaces 107 and 108, respectively, is constant. In still another form, which does not form part of the invention, the radial dimension 102 as measured from the longitudinal axis 101, and along a line to the first and second convexly curved surfaces 107 and 108 respectively is variable.

Another aspect of the present invention relates to an archwire 10 for use with a passive self-ligation orthodontic bracket 11, and which has an archwire slot 15, and which further includes an elongated and resilient main body 100 which is received within the archwire slot 15 with a minimal amount of bending. The archwire slot 15 has a width and height dimension, 17 and 18, respectively, and the archwire 10 when received in the archwire slot 15 cooperates with the passive self-ligation orthodontic bracket 11 so as to simultaneously impart forces to the passive self-ligation orthodontic bracket, and which affects first, second and third order movements 42, 43 and 44 respectively of a patient's tooth 40, and upon which the orthodontic bracket is attached. The resilient main body 100 of the archwire 10 has a circular-square or circular-rectangular cross-sectional shape which, when cooperating with the archwire slot 15 consistently maintains first order movement control 42 of the tooth 41 of the patient, while simultaneously permitting the passive self-ligation orthodontic bracket 11 to exert a selectable amount of torqueing force to the tooth 41 so as to achieve desired second and third order movements 43 and 44 of the tooth 41 based, at least in part, upon thickness dimension of the archwire 10 which is selected and positioned within the archwire slot 15.

More specifically, the archwire 10 for use with a passive self-ligation orthodontic bracket 11, and which has an archwire slot 15 includes an elongated and resilient main body 100 which is dimensioned so as to be received within the archwire slot 15 of the passive self-ligation bracket 11. The resilient main body 100 of the archwire 10 has a circular-square or circular-rectangular cross-sectional shape having a predetermined circumferential width dimension 103, and a variable thickness dimension 104. The resilient main body 100 further has a longitudinal axis 101, and wherein the circular-square or circular-rectangular shape main body 100 is further defined by spaced, substantially parallel, and planar superior and inferior facing surfaces 105 and 106, and which are individually oriented along parallel chords 105A and 106A, respectively, of the elongated circular-square or circular-rectangular shaped main body 100. The thickness dimension 104 of the resilient main body 100, is measured between the superior and inferior facing surfaces 105 and 106. Further the superior and inferior facing surfaces 105 and 106 are located at an equally spaced, radial distance from the longitudinal axis 101. The circumferential width dimension 103 of the resilient main body 100 of the archwire 10 maintains a consistent first order movement 42 of a tooth 40 of a patient when the archwire 10 is cooperating with a passive self-ligation bracket 11. The variable thickness dimension 104 of the archwire 10 facilitates an adjustable application of a force to the passive self-ligation orthodontic bracket 11 so as to achieve a clinician selectable and controllable second and third order movement 43 and 44 of the tooth 41 of the patient.

Therefore it will be seen that the archwire 10 of the present invention provides a convenient means by which a clinician may apply predetermined amounts of second and third degree movement to a patient's tooth in order to provide fine, finishing alignments for the teeth of a patient undergoing an orthodontic treatment regimen. Still further, the new archwire 10 provides a convenient means for addressing the problems associated with the prior art practices and which have been impeded by the inability of clinicians to close the moveable gates of passive self-ligation brackets especially when such brackets have been oriented so as to impart low torqueing couples, or high torqueing couples to the teeth 40 upon which the orthodontic brackets are attached. The present archwire is easy to employ, allows a clinician to use a single archwire style for the vast majority of their clinical applications; allows a clinician to use lighter force archwires, which provides greater comfort for the patients, and additionally allows clinicians to rotate and move a patient's teeth in a manner which can achieve superior results in shorter treatment times and with greatly improved clinical results.

## Claims

1. An archwire (10) for use with a passive self-ligation orthodontic bracket I (11) having a bracket body that defines an archwire slot (15) J Z including an anterior facing surface (20) and a gate (23) that is movable relative to the bracket body between a non-occluding position (31) and an occluding position (32), in which the anterior facing surface (20) and a posterior facing surface (25) of the gate (23) define a slot width dimension (17), the archwire (10) comprising:
an elongated resilient main body (100) which is dimensioned to be received within the archwire slot, the elongated resilient main body having a cross-sectional shape having a pair of spaced, convexly curved anterior and posterior facing surfaces (107,108), and a pair of spaced, planar and substantially parallel superior and inferior facing surfaces (105, 106),
wherein the pair of convexly curved surfaces (107, 108) respectively join the superior and inferior facing planar surfaces (105, 106) at discrete angular regions (110), each of the convexly curved surfaces (107, 108) defining a radial dimension (102) of the archwire (10) when measured along a line extending radially, outwardly from a longitudinal axis (101) of the archwire (10), and to the respective convexly curved surfaces (107, 108), and a width dimension (103) of the archwire (10),
the width dimension (103) of the archwire (10) being less than or equal to the slot width dimension (17), **characterised in, that**
each of the radial dimensions (102) and the width dimension (103) of the archwire (10) are constant,

2. The archwire of claim 1 wherein the planar surfaces (105, 106) define a thickness dimension (104), which is measured between the substantially planar, and parallel oriented superior and inferior facing surfaces (105, 106).

3. The archwire of claim 1 wherein the width dimension (103) is equal to the slot width (25).

4. The archwire of claim 1 wherein the archwire slot includes an inferior surface (22) spaced apart from a superior surface (21) to define a slot height dimension (18), each of the inferior surface (22) and the superior surface (21) extending from the anterior surface (20), and
wherein the thickness dimension (104) is at least 55 percent of the slot height.

5. The archwire of claim 1 wherein the pair of convexly curved surfaces (107, 108) J Z are arcs defined by a circle.

6. In combination: an archwire (10) of any of claims 1-5 and a self-ligation orthodontic bracket (11) adapted to provide a neutral torqueing couple (122) or a low torqueing couple (120) to the archwire (10) when received in the archwire slot (15) comprising:
a bracket body that defines an archwire slot (15) including an anterior facing surface (20) and an inferior surface (22) spaced apart from a superior surface (21) to define a slot height dimension (18), each of the inferior surface (22) and the superior surface (21) extending in the same direction from the anterior facing surface (20); and
a gate that is movable relative to the bracket body between a non-occluding position (31) and an occluding position (32) in which the anterior facing surface (20) of the self-ligation bracket and a posterior facing surface of the gate (23) define a slot width dimension (17).

7. The combination of claim 6 further including:
a self-ligation orthodontic bracket (11) adapted for providing a high torqueing couple (121) comprising:
a bracket body that defines an archwire slot (15) including an anterior facing surface (20) and an inferior surface (22) spaced apart from a superior surface (21) to define a slot height dimension (18), each of the inferior surface (22) and the superior surface (21) extending in the same direction from the anterior facing surface (20); and
a gate (23) that is movable relative to the bracket body between a non-occluding position (31) and an occluding position (32) in which the anterior facing surface (20) of the self-ligation orthodontic bracket and a posterior facing surface (25) of the gate (23) define a slot width dimension (17); and
wherein the width dimension (103) of the archwire (10) is substantially equal to the slot width dimension (17) of the high torqueing couple providing self-ligation orthodontic bracket, wherein when the archwire is in the archwire slot of each self-ligation orthodontic bracket, each gate is movable to the occluding position (32) and the archwire is configured to provide the same degree of first order movement control to each of the neutral torqueing couple providing or low torqueing couple providing self-ligation orthodontic bracket and the high torqueing couple providing self-ligation orthodontic bracket.

8. The combination of claim 7 wherein when the archwire (10) is in each archwire slot (15) and each gate is closed, each of the neutral torqueing couple providing or low torqueing couple providing self-ligation orthodontic bracket and the high torqueing couple providing self-ligation orthodontic bracket (11) is moveable relative to the archwire (10).

## Patentansprüche

1. Bogendraht (10) zur Verwendung mit einem passiven selbstligierenden kieferorthopädischen Bracket (11) mit einem Bracket-Körper, der einen Bogendrahtschlitz (15) definiert, der eine nach vorne zeigende Oberfläche (20) und ein Tor (23) aufweist, das im Verhältnis zu dem Bracket-Körper zwischen einer nicht verschließenden Position (31) und einer verschließenden Position (32) beweglich ist, wobei die nach vorne zeigende Oberfläche (20) und eine nach hinten zeigende Oberfläche (25) des Tors (23) eine Schlitzbreitenabmessung (17) definieren, wobei der Bogendraht (10) folgendes umfasst:
einen länglichen nachgiebigen Hauptkörper (100), der für eine Aufnahme in dem Bogendrahtschlitz bemessen ist, wobei der längliche nachgiebige Hauptkörper eine Querschnittsform aufweist mit einem Paar beabstandeter, konvex gebogener nach vorne und nach hinten zeigender Oberflächen (107, 108) und mit einem Paar beabstandeter, planarer und im Wesentlichen paralleler nach oben und nach unten zeigender Oberflächen (105, 106);
wobei das Paar konvex gebogener Oberflächen (107, 108) entsprechend die nach oben und nach unten zeigenden planaren Oberflächen (105, 106) an diskreten Winkelregionen (110) verbindet, wobei jede der konvex gebogenen Oberflächen (107, 108) eine radiale Abmessung (102) des Bogendrahts (10) definiert, gemessen entlang einer Linie, die sich radial auswärts von einer Längsachse (101) des Bogendrahts (10) und zu entsprechend konvex gebogenen Oberflächen (107, 108) erstreckt, und eine Breitenabmessung (103) des Bogendrahts (10),
wobei die Breitenabmessung (103) des Bogendrahts (10) kleiner oder gleich der Schlitzbreitenabmessung (17) ist, **dadurch gekennzeichnet, dass**
jede der radialen Abmessungen (102) und die Breitenabmessung (103) des Bogendrahts (10) konstant sind.

2. Bogendraht nach Anspruch 1, wobei die planaren Oberflächen (105, 106) eine Dickenabmessung (104) definieren, die zwischen den im Wesentlichen planaren und parallel ausgerichteten nach oben und nach unten ausgerichteten Oberflächen (105, 106) gemessen wird.

3. Bogendraht nach Anspruch 1, wobei die Breitenabmessung (103) gleich der Schlitzbreite (25) ist.

4. Bogendraht nach Anspruch 1, wobei der Bogendrahtschlitz eine untere Oberfläche (22) aufweist, die zu einer oberen Oberfläche (21) beabstandet ist, um eine Schlitzhöhenabmessung (18) zu definieren, wobei sich jede Oberfläche der unteren Oberfläche (22) und der oberen Oberfläche (21) von der vorderen Oberfläche (20) erstreckt, und wobei die Dickenabmessung (104) mindestens 55 Prozent der Schlitzhöhe entspricht.

5. Bogendraht nach Anspruch 1, wobei das Paar konvex gebogener Oberflächen (107, 108) durch einen Kreis definierte Bögen sind.

6. Kombination eines Bogendrahts (10) nach einem der Ansprüche 1 bis 5 und eines selbstligierenden kieferorthopädischen Brackets (11), das bei Aufnahme in dem Bogendrahtschlitz (15) eine neutral drehende Kopplung (122) oder eine niedrig drehende Kopplung (120) mit dem Bogendraht (10) bereitstellen kann, umfassend:
einen Bracket-Körper, der einen Bogendrahtschlitz (15) definiert, einer eine nach vorne zeigende Oberfläche (20) und eine untere Oberfläche (22) aufweist, die von einer oberen Oberfläche (21) beabstandet ist, um eine Schlitzhöhenabmessung (18) zu definieren, wobei sich die untere Oberfläche (22) und die obere Oberfläche (21) jeweils von der nach vorne zeigenden Oberfläche (20) in die gleiche Richtung erstrecken; und
ein Tor, das im Verhältnis zu dem Bracket-Körper zwischen einer nicht verschließenden Position (31) und einer verschließenden Position (32) beweglich ist, wobei die nach vorne zeigende Oberfläche (20) des selbstligierenden Brackets und eine nach hinten zeigende Oberfläche des Tors (23) eine Schlitzbreitenabmessung (17) definieren.

7. Kombination nach Anspruch 6, ferner umfassend:
ein selbstligierendes kieferorthopädisches Bracket (11), das eine hoch drehende Kopplung (121) bereitstellen kann, umfassend:
einen Bracket-Körper, der einen Bogendrahtschlitz (15) definiert, der eine nach vorne zeigende Oberfläche (20) und eine untere Oberfläche (22) aufweist, die zu einer oberen Oberfläche (21) beabstandet ist, um eine Schlitzhöhenabmessung (18) zu definieren, wobei sich die untere Oberfläche (22) und die obere Oberfläche (21) jeweils von der nach vorne zeigenden Oberfläche (20) in die gleiche Richtung erstrecken; und
ein Tor (23), das im Verhältnis zu dem Bracket-Körper zwischen einer nicht verschließenden Position (31) und einer verschließenden Position (32) beweglich ist, wobei die nach vorne zeigende Oberfläche (20) des selbstligierenden kieferorthopädischen Brackets und eine nach hinten zeigende Oberfläche (25) des Tors (23) eine Schlitzbreitenabmessung (17) definieren; und
wobei die Breitenabmessung (103) des Bogendrahts (10) im Wesentlichen der Schlitzbreitenabmessung (17) der hoch drehenden Kopplung entspricht, welche das selbstligierende kieferorthopädische Bracket bereitstellt, wobei, wenn sich der Bogendraht in dem Bogendrahtschlitz jedes selbstligierenden kieferorthopädischen Brackets befindet, jedes Tor an die verschließende Position (32) beweglich ist, und wobei der Bogendraht so gestaltet ist, dass er das gleiche Maß der Bewegungskontrolle erster Ordnung an jedes Bracket eines eine neutral drehenden Kopplung bereitstellenden oder eine niedrig drehende Kopplung bereitstellenden selbstligierenden kieferorthopädischen Brackets bereitstellen kann sowie das die hoch drehende Kopplung bereitstellende selbstligierende kieferorthopädische Bracket.

8. Kombination nach Anspruch 7, wobei, wenn sich der Bogendraht (10) in jedem Bogendrahtschlitz (15) befindet und jedes Tor geschlossen ist, jedes Bracket eines eine neutral drehenden Kopplung bereitstellenden oder eine niedrig drehende Kopplung bereitstellenden selbstligierenden kieferorthopädischen Brackets sowie das die hoch drehende Kopplung bereitstellende selbstligierende kieferorthopädische Bracket (11) im Verhältnis zu dem Bogendraht (10) beweglich ist.

## Revendications

1. Fil d'arc (10) destiné à être utilisé avec un bracket passif auto-fixant (11) ayant un corps de bracket qui définit une fente de fil d'arc (15) comprenant une surface tournée vers l'avant (20) et une porte (23) qui est mobile par rapport au corps de bracket entre une position de non-occlusion (31) et une position d'occlusion (32), la surface tournée vers l'avant (20) et une surface tournée vers l'arrière (25) de la porte (23) définissant une dimension de largeur de fente (17), le fil d'arc (10) comprenant :
un corps principal élastique allongé (100) qui est dimensionné pour être reçu dans la fente de fil d'arc, le corps principal élastique allongé ayant une forme de section transversale ayant une paire de surfaces espacées, incurvées de manière convexe, tournées vers l'avant et vers l'arrière (107, 108), et une paire de surfaces espacées, planes et sensiblement parallèles tournées vers le haut et vers le bas (105, 106),
la paire de surfaces incurvées de manière convexe (107, 108) joignant respectivement les surfaces planes tournées vers le haut et vers le bas (105, 106) au niveau de régions angulaires discrètes (110), chacune des surfaces incurvées de manière convexe (107, 108) définissant une dimension radiale (102) du fil d'arc (10) lorsqu'elle est mesurée le long d'une ligne s'étendant radialement, vers l'extérieur à partir d'un axe longitudinal (101) du fil d'arc (10), et vers les surfaces incurvées de manière convexe (107, 108) respectives, et une dimension de largeur (103) du fil d'arc (10),
la dimension de largeur (103) du fil d'arc (10) étant inférieure ou égale à la dimension de largeur de la fente (17), **caractérisé en ce que**
chacune des dimensions radiales (102) et la dimension de largeur (103) du fil d'arc (10) sont constantes.

2. Fil d'arc selon la revendication 1, les surfaces planes (105, 106) définissant une dimension d'épaisseur (104), qui est mesurée entre les surfaces sensiblement planes et orientées parallèlement tournées vers le haut et vers le bas (105, 106).

3. Fil d'arc selon la revendication 1, la dimension de largeur (103) étant égale à la largeur de la fente (25).

4. Fil d'arc selon la revendication 1, la fente de fil d'arc comprenant une surface inférieure (22) espacée d'une surface supérieure (21) pour définir une dimension de hauteur de fente (18), chacune de la surface inférieure (22) et de la surface supérieure (21) s'étendant à partir de la surface tournée vers l'avant (20), et
la dimension d'épaisseur (104) étant égale à au moins 55 pour cent de la hauteur de fente.

5. Fil d'arc selon la revendication 1, la paire de surfaces incurvées de manière convexe (107,108) étant des arcs définis par un cercle.

6. En combinaison : fil d'arc (10) selon l'une quelconque des revendications 1 à 5 et bracket auto-fixant (11) conçu pour fournir un couple de serrage neutre (122) ou un couple de serrage faible (120) au fil d'arc (10) lorsqu'il est reçu dans la fente de fil d'arc (15) comprenant :
un corps de bracket qui définit une fente de fil d'arc (15) comprenant une surface tournée vers l'avant (20) et une surface inférieure (22) espacée d'une surface supérieure (21) pour définir une dimension de hauteur de fente (18), chacune de la surface inférieure (22) et de la surface supérieure (21) s'étendant dans la même direction à partir de la surface tournée vers l'avant (20) ; et
une porte qui est mobile par rapport au corps de bracket entre une position de non-occlusion (31) et une position d'occlusion (32), la surface tournée vers l'avant (20) du bracket auto-fixant et une surface tournée vers l'arrière de la porte (23) définissent une dimension de largeur de fente (17).

7. Combinaison selon la revendication 6, comprenant en outre :
un bracket auto-fixant (11) conçu pour fournir un couple de torsion élevé (121) comprenant :
un corps de bracket qui définit une fente de fil d'arc (15) comprenant une surface tournée vers l'avant (20) et une surface inférieure (22) espacée d'une surface supérieure (21) pour définir une dimension de hauteur de fente (18), chacune de la surface inférieure (22) et de la surface supérieure (21) s'étendant dans la même direction à partir de la surface tournée vers l'avant (20) ; et
une porte (23) qui est mobile par rapport au corps de bracket entre une position de non-occlusion (31) et une position d'occlusion (32) dans laquelle la surface tournée vers l'avant (20) du bracket auto-fixant et une surface tournée vers l'arrière (25) de la porte (23) définissent une dimension de largeur de fente (17) ; et
la dimension de largeur (103) du fil d'arc (10) étant sensiblement égale à la dimension de largeur de fente (17) du couple de serrage élevé fournissant un bracket auto-fixant, lorsque le fil d'arc est dans la fente de fil d'arc de chaque bracket auto-fixant, chaque porte étant mobile jusqu'à la position d'occlusion (32) et le fil d'arc étant conçu pour fournir le même degré de commande de mouvement de premier ordre à chacun du couple de serrage neutre ou du couple de serrage faible fournissant un bracket auto-fixant et du couple de serrage élevé fournissant un bracket auto-fixant.

8. Combinaison selon la revendication 7, lorsque le fil d'arc (10) se trouve dans chaque fente de fil d'arc (15) et chaque porte est fermée, chacun du couple de serrage neutre ou du couple de serrage faible fournissant un bracket auto-fixant et du couple de serrage élevé fournissant un bracket auto-fixant (11) étant mobile par rapport au fil d'arc (10).
